# EUROPEAN PATENT APPLICATION

(11) **EP 1 415 862 A1**
(43) Date of publication of application: **06.05.2004**
(21) Application number: 02755746.1
(22) Date of filing: 01.08.2002
(51) Int. Cl.: B60R 16/02, B60R 11/02, G09G 5/00

(54) **ON-VEHICLE DEVICE NETWORK SYSTEM AND POWER SUPPLY CONTROL APPARATUS**

(30) Priority: 01.08.2001 JP 2001233445; 01.08.2001 JP 2001233446; 01.08.2001 JP 2001233447; 02.08.2001 JP 2001234710
(71) Applicant: THE YOKOHAMA RUBBER CO., LTD., Tokyo, 105-0004 (JP)
(72) Inventor: HATTORI, Yutaka C/O The Yokohama Rubber Co., LTD., Hiratsuka City, Kanagawa 254-8601 (JP); HATANO, Yasuo C/O The Yokohama Rubber Co., LTD., Hiratsuka City, Kanagawa 254-8601 (JP)
(74) Representative: VOSSIUS & PARTNER
(86) International application number: PCT/JP2002/007844
(87) International publication number: WO 2003/011649

(57) **Abstract**

To provide a network system of on-vehicle electric devices in which a central control unit mounted on a vehicle and a plurality of on-vehicle electric devices are connected, and a power supply controller. The network system includes one transmitter-receiver mounted on the vehicle, which includes an antenna for transmitting/receiving therethrough a signal in a wireless manner, and which is connected to the central control unit in a wired manner. The network system also includes a power supply controller or a plurality of electric device controllers provided in correspondence to each on-vehicle electric device, the electric device controller including an antenna for transmitting/receiving therethrough a signal to/from the transmitter-receiver in a wireless manner so as to control the on-vehicle electric device on the basis-of the received signal, or so as to process a signal generated by the on-vehicle electric devices to transmit the processed signal to the transmitter-receiver. Alternatively, instead of the antenna provided to the transmitter-receiver, it is also possible to use a radio leakage device which is connected in series with the central control unit through a high frequency cable to be provided in vicinities of positions of the on-vehicle electric devices, and which generates a radio wave corresponding to the signals in the vicinities of the positions of the on-vehicle electric devices.

## Description

### TECHNICAL FIELD

The present invention relates to a network system of on-vehicle electric devices in which wiring of cables distributed between on-vehicle electric devices and a central control unit mounted on a vehicle is simplified, and lightening of a vehicle weight, reduction of a cost, and certainty of an operation are ensured, and to a power supply controller.

### BACKGROUND ART

An on-vehicle electric device such as an air conditioner, an illumination lamp or a warning lamp provided in a vehicle is manipulated by depressing a corresponding switch or button installed on a panel on a side of a driver's seat. Conventionally, a controller for driving these on-vehicle electric devices and the switches for manipulating these on-vehicle electric devices were connected through signal cables. In addition, these signal cables and a power supply cable through which an electric power is supplied from a battery to each of the on-vehicle electric devices are collectively bundled to be used, and called a wire harness.

However, in recent years, kinds of electronic devices mounted on a vehicle have been increased, as typified by an electronic controller of a vehicle driving system and by accessories such as a car navigation system and an on-vehicle TV, and the number of mounted devices has also been increased. In addition, there has been developed an on-vehicle driving support image display system in which a plurality of monitoring cameras such as CCD cameras are mounted as a part of on-vehicle electric devices on a vehicle, and images obtained from a plurality of monitoring cameras are displayed on an intra-vehicle monitor. In the on-vehicle driving support image display system, since image information from a plurality of cameras mounted on a vehicle can be displayed on the monitor, when a vehicle is backed or parked in a congested car park, a driver can safely park his/her car while looking at the monitor, and in addition to this operation, a driver can be provided with information of the circumference of his/her car useful in safe driving.

In the on-vehicle driving support image display system as well, information of an image captured by an imaging device such as a CCD camera was transmitted to an image controller serving as a central control unit through a signal cable or an optical fiber cable distributed within a vehicle.

Consequently, the number of wiring required to distribute cables such as a signal cable and a power supply cable for use in these devices was increased, and a space for the wiring was required. Moreover, a vehicle weight was increased as much as several tens kg due to the distribution of the cables to remarkably reduce a driving force of a vehicle.

On the other hand, there has been proposed a technique in which an on-vehicle LAN system for controlling devices mounted on a vehicle is constructed by utilizing wireless communication to simplify wiring of cables within the vehicle to realize lightening of the vehicle and space saving.

For example, in JP 11-266251 A, there is disclosed an intra-vehicle wiring device in which leakage cables are distributed between a control unit arranged in a predetermined position within a vehicle for taking charge of the whole control and various kinds of electric device controllers arranged in positions remote from the control unit and having predetermined functions, and an electromagnetic wave (radio wave) corresponding to a control signal transmitted between the control unit and the various kinds of electric device controllers is generated through the leakage cables so that the electric device controllers carry out wireless communication with the control unit using the leakage cables through the electromagnetic wave via a transmission/reception antenna to thereby simplify a wire harness complicated along with promotion of intelligence of an automobile.

However, in the above-mentioned intra-vehicle wiring device, since one pair of cables are established in the form of the leakage cables, a weight of the cables is not ignored. In addition, there is encountered a problem that a weight of the leakage cable itself becomes heavier than that of a normal cable. For this reason, it is impossible to reduce the vehicle weight.

In addition, the leakage cables utilized in the above-mentioned intra-vehicle wiring device are expensive. Moreover, the radio wave generated from the leakage cables is weak, and hence there is a possibility that malfunction due to noises or the like may be caused. Thus, the leakage cables can not be perfectly replaced with the conventional wire harness.

Also, in a case where the above-mentioned on-vehicle driving support image display system is newly mounted to a used vehicle, there is also encountered a problem that the complicated cable wiring is obliged to be carried out.

In the light of the foregoing, in order to solve the above-mentioned problems, an object of the present invention is to provide a network system of on-vehicle electric devices in which wiring of cables of various kinds of on-vehicle electric devices mounted on a vehicle can be cut down to reduce a vehicle weight and a vehicle cost and which is capable of being readily mounted on a vehicle to allow control for various kinds of on-vehicle electric devices to be accurately carried out, and to provide a power supply controller used in the network system.

### SUMMARY OF THE INVENTION

According to the present invention, there is provided a network system of on-vehicle electric devices in which a central control unit mounted on a vehicle are connected and a plurality of on-vehicle electric devices, the network system including:
one transmitter-receiver mounted on the vehicle and connected to the central control unit in a wired manner, the one transmitter-receiver including an antenna for transmitting/receiving therethrough a signal in a wireless manner; and
a plurality of electric device controllers provided in one-to-one correspondence to the plurality of on-vehicle electric devices, each of the electric device controllers including an antenna for transmitting/receiving therethrough a signal to/from the transmitter-receiver in a wireless manner so as to control corresponding one of the on-vehicle electric devices on the basis of the received signal or so as to process a signal generated by the corresponding one of the on-vehicle electric devices to transmit the processed signal to the transmitter-receiver.

Here, when the transmitter-receiver transmits a control signal for controlling corresponding one of the on-vehicle electric devices to corresponding one of the electric device controllers, at least an identification signal of the on-vehicle electric device as an object of the control is preferably transmitted together with the control signal. Further, the transmitter-receiver preferably transmits a WARD signal.

At this time, when the on-vehicle electric device specified with the identification signal is corresponding one of the on-vehicle electric devices provided in one-to-one correspondence to the electric device controllers, before predetermined control information based on the control signal is outputted to the corresponding one of the on-vehicle electric devices, corresponding one of the electric device controllers preferably outputs a reset signal to reset the on-vehicle electric device to be controlled.

Further, the network system may have a structure such that: an image display device mounted on the vehicle for supporting driving of the vehicle is connected to the central control unit; one of the on-vehicle electric devices includes an image pickup unit for capturing an image of the circumference of the vehicle from the vehicle, and an image signal obtained from the image pickup unit is transmitted to corresponding one of the electric device controllers so as for the image signal to be transmitted to the central control unit through the corresponding one of the electric device controllers and the transmitter-receiver; the central control unit processes the image signal sent from the transmitter-receiver; and the image display device displays thereon the image of the circumference of the vehicle on the basis of the processed image signal.

At this time, the central control unit preferably processes the image signal on the basis of a set image display pattern. Further, it is preferable that, when the plurality of electric device controllers transmit the respective image signals, the image signals are transmitted in the form of radio waves having different frequency bands predetermined for the electric device controllers, respectively, and the transmitter-receiver successively changes the frequency bands of the transmitted radio waves to reproduce the image signals. Further, the electric device controller preferably transmits an identification signal specific to the electric device controller together with the image signal to the transmitter-receiver.

Note that the image pickup unit is arranged in at least one of, for example, a front side of the vehicle, side faces of the vehicle, and a back side of the vehicle. Further, image pickup unit may include an infrared camera. At this time, the infrared camera is preferably arranged in a central portion in the front side of the vehicle.

Further, the network system may have a structure-such that the central control unit detects an obstacle to travelling of the vehicle to generate risk information used to estimate a degree of risk at which the vehicle may collide with the obstacle, and makes the image display device display thereon the risk information.

Further, according to the present invention, there is provided a network system of on-vehicle electric devices in which a central control unit mounted on a vehicle and a plurality of on-vehicle electric devices are connected, the network system including:
one transmitter-receiver mounted on the vehicle and including a plurality of radio leakage devices for transmitting/receiving signals in a wireless manner, the plurality of radio leakage devices being connected in series with the central control unit through a cable to be provided in vicinities of positions of the on-vehicle electric devices, and when signals are transmitted from the central control unit to the on-vehicle electric devices, generating radio waves corresponding to the signals in the vicinities of the positions of the on-vehicle electric devices; and
a plurality of electric device controllers provided in one-to-one correspondence to the plurality of on-vehicle electric devices, each of the electric device controllers including an antenna for transmitting/receiving therethrough a signal to/from the transmitter-receiver in a wireless manner so as to control corresponding one of the on-vehicle electric devices on the basis of the received signal or so as to process a signal generated by the corresponding one of the on-vehicle electric devices to transmit the processed signal to the transmitter-receiver.

Here, when the transmitter-receiver transmits a control signal for controlling corresponding one of the on-vehicle electric devices to corresponding one of the electric device controllers, at least an identification signal of the on-vehicle electric device as an object of the control is preferably transmitted together with the control signal. Further, the transmitter-receiver preferably transmits a WARD signal.

Further, when the on-vehicle electric device specified with the identification signal is corresponding one of the on-vehicle electric devices provided in one-to-one correspondence to the electric device controllers, before predetermined control information based on the control signal is outputted to the corresponding one of the on-vehicle electric devices, corresponding one of the electric device controllers preferably outputs a reset signal to reset the on-vehicle electric device to be controlled.

Further, according to the present invention, there is provided a power supply controller, which is connected in one-to-one correspondence to an electric device, for changing ON/OFF of supply of an electric power to the electric device in accordance with a control signal issued from a central control unit, wherein, in a case that the power supply receives a signal from the central control unit, a WARD signal, an identification signal of the electric device as an object of control and a control signal used to control the electric device are discriminated from the received signal; and that the electric device specified with the identification signal is the connected electric device, then the power supply outputs a reset signal used to reset the electric device to be controlled before outputting predetermined control information based on the control signal.

### BRIEF DESCRIPTION OF THE DRAWINGS

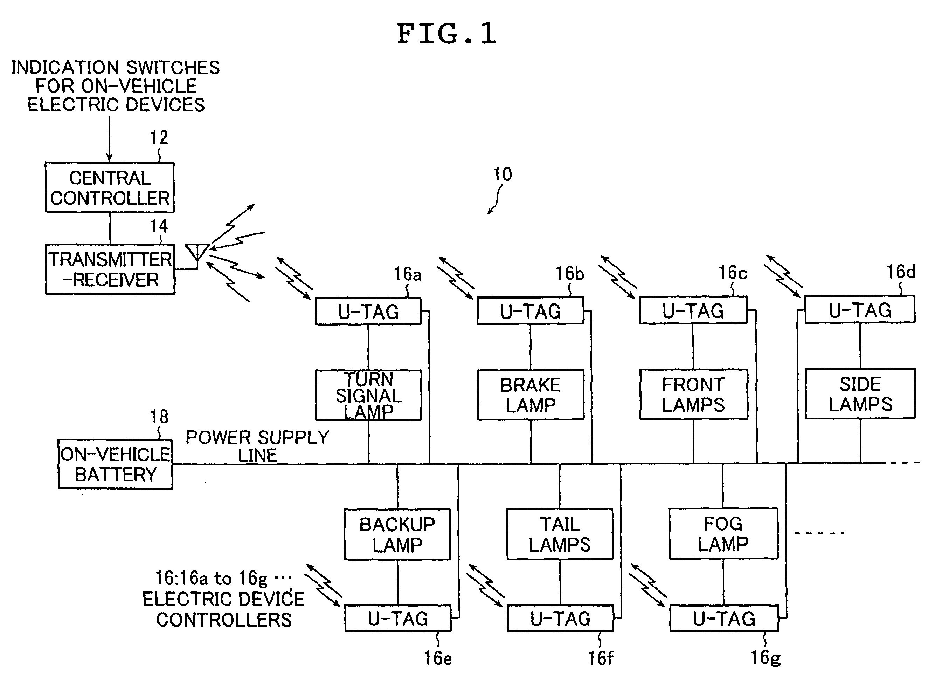

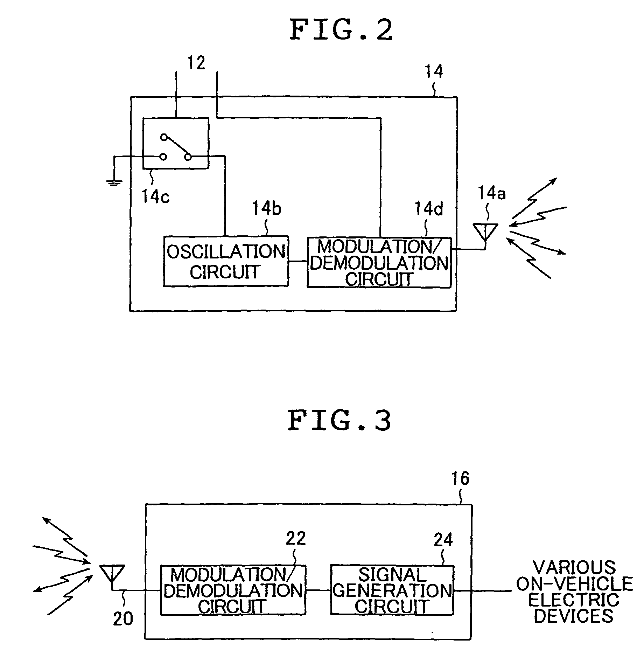

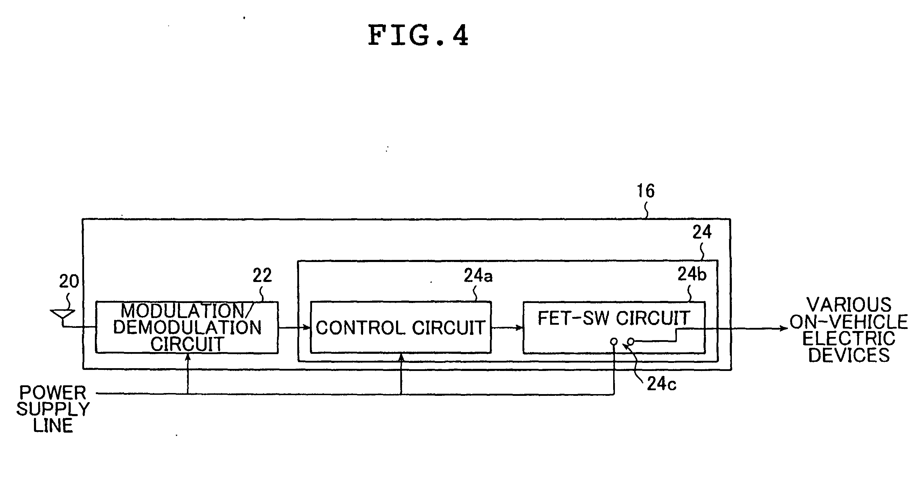

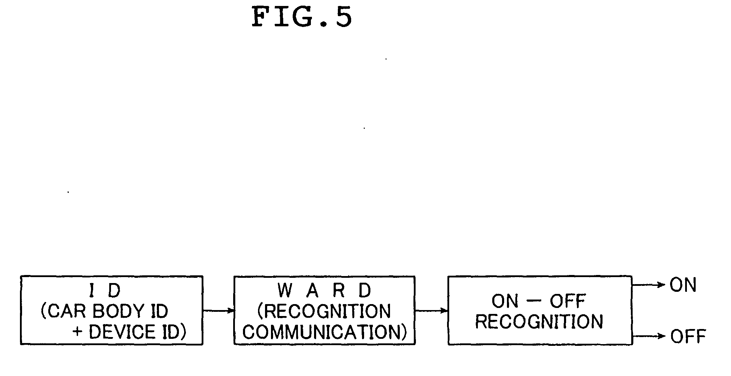

FIG. 1 is a block diagram showing one embodiment of a network system of on-vehicle electric devices of the present invention; FIG. 2 is a block diagram of one example of a transmitter-receiver in FIG. 1; FIG. 3 is a block diagram of one example of an electric device controller in FIG. 1; FIG. 4 is a block diagram showing a schematic configuration of one example of an electric device controller in the present invention; and FIG. 5 is a diagram showing a communication protocol in the electric device controller shown in FIG. 4.

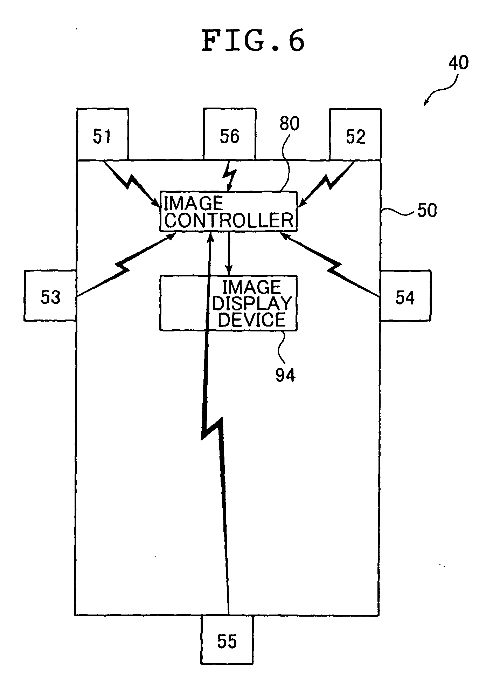

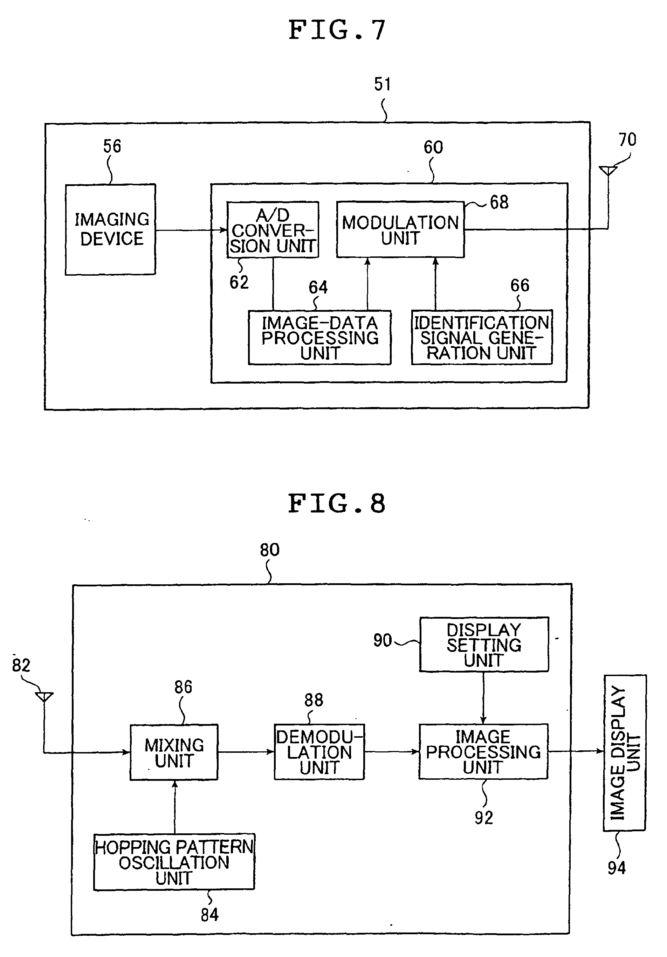

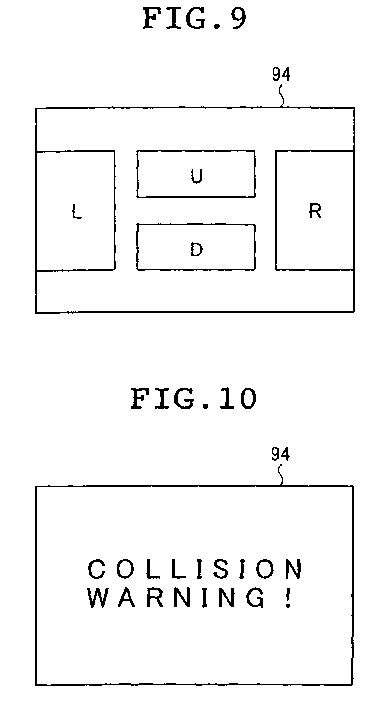

In addition, FIG. 6 is a diagram showing a configuration of an on-vehicle driving support image display system according to one embodiment of the present invention; FIG. 7 is a block diagram of an image transmitter constituting the on-vehicle driving support image display system shown in FIG. 6; FIG. 8 is a block diagram of one example of an image controller constituting the on-vehicle driving support image display system shown in FIG. 6; FIG. 9 is a diagram showing one example of a display screen of an image display device constituting the on-vehicle driving support image display system shown in FIG. 6; and FIG. 10 is a diagram showing another example of a display screen of the image display device of the on-vehicle driving support image display system shown in FIG. 6.

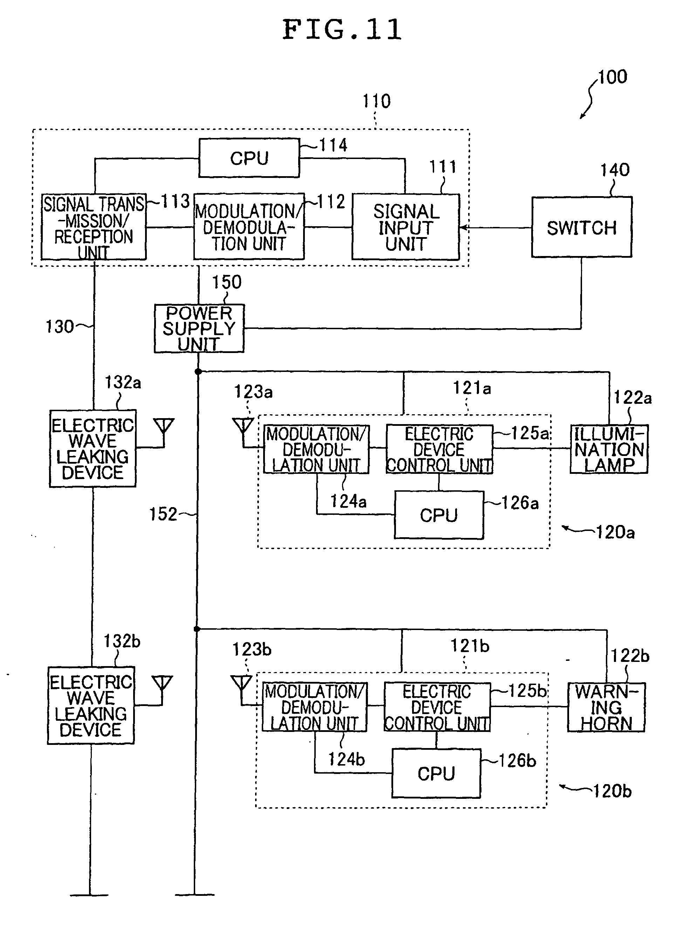

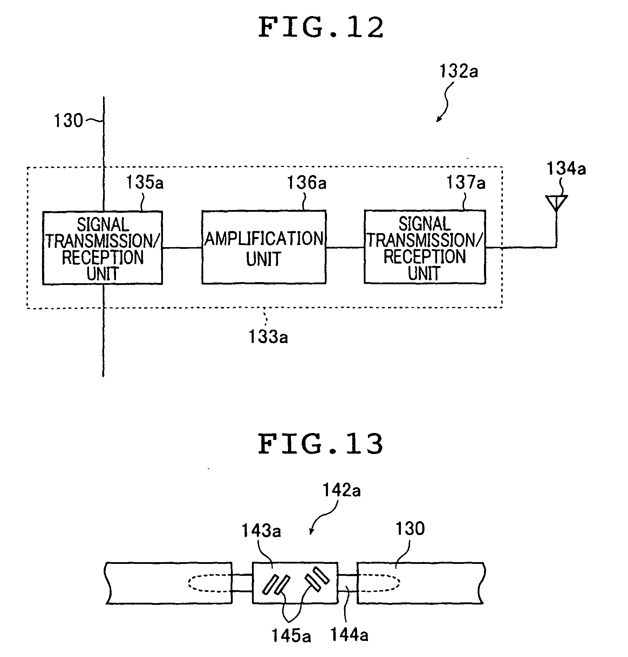

Further, FIG. 11 is a block diagram showing a schematic configuration of a network system that uses radio leakage devices, according to one embodiment of the present invention; FIG. 12 is a block diagram showing a schematic configuration of the radio leakage device shown in FIG. 11; and FIG. 13 is a diagram useful in explaining another radio leakage device different from the radio leakage device shown in FIG. 12.

### BEST MODE FOR CARRYING OUT THE INVENTION

FIG. 1 shows a block diagram of a control system 10 for on-vehicle electric devices according to one embodiment of a network system of on-vehicle electric devices of the present invention.

The control system 10 includes a central controller 12, a transmitter-receiver 14, and electric device controllers 16 (16a, 16b, ..., each of them is illustrated as "U-TAG" in FIG. 1) accompanied in one-to-one correspondence to various kinds of on-vehicle electric devices mounted on an automobile, and serves to control operations of the various kinds of on-vehicle electric devices.

Here, as for the on-vehicle electric devices, there are given electric devices for an automobile, e.g., an automobile body electric devices for driving various kinds of operations such as an operation of wipers, injection of washer liquid, and operations of an electric horn, a heater and an air conditioner, terminal units of an ITS (Intelligent Transport System), on-vehicle electric devices such as an audio device and a TV, and the like in addition to vehicle flash devices and vehicle illumination devices such as turn signal lamps, a break lamp, front lamps, side lamps, back-up lamps, tail lamps, a fog lamp, an interior lamp and a speed display lamp.

The central controller 12 corresponds to a central control unit in the present invention, and is electrically connected to instruction switches or buttons of the above-mentioned on-vehicle electric devices which are arranged in the surroundings of a driver's seat of a vehicle. Thus, the central controller 12 is a device for, when an operator such as a driver issues an instruction to operate an on-vehicle electric device by depressing an instruction switch or button, generating a control signal for the operation of the on-vehicle electric device, and for processing a signal transmitted from the on-vehicle electric device.

For example, at the time when a driver turns on a direction indicating switch for a turn signal lamp in order to turn a vehicle to the left, the central controller 12 generates a control signal used to start flash of the turn signal lamp for turning to the left. On the other hand, at the time when the driver turns off the direction indicating switch, the central controller 12 generates a control signal used to stop the flash of the turn signal lamp.

Such control signals are generated in the central controller 12. At the same time, an identification (ID) signal containing therein a car body ID signal specifically assigned to a vehicle, a device ID signal assigned to an on-vehicle electric device in order to control its operation, a WARD signal used to prevent malfunction, and the like, which are previously stored in a memory or the like, are called to be generated, and the control signal and the identification signal are then sent in the form of a transmission signal to the transmitter-receiver 14. Here, each of the car body ID signal, the device ID signal and the WARD signal is a signal in which 0s and 1s of specific bits are continuously arranged in accordance with a predetermined rule. Note that, the WARD signal is a signal obtained by repeatedly arranging a block which, for example, has 1s arranged by 10 bits right after 0s arranged by 10 bits by three blocks. Since such a signal is a signal which is hardly transmitted in communication, it is possible to reduce malfunction of an on-vehicle electric device due to the received signal.

Note that, the central controller 12 is constructed in the form of a circuit board having a CPU and constituent elements, for example, formed thereon.

The transmitter-receiver 14, as shown in FIG. 2, has an antenna 14a, an oscillation circuit 14b for generating a carrier, a switching circuit 14c for driving the oscillation circuit 14b along with generation of the control signal and the identification signal generated in the central controller 12, and a modulation/demodulation circuit 14d for generating a high frequency signal so as to carry a transmission signal on the carrier to generate a high frequency signal to send the resultant high frequency signal to the antenna 14a, and for generating a verification signal and an identification signal from the high frequency signal transmitted from an antenna 20 (refer to FIG. 3) of corresponding one of electric device controllers 16 connected to various kinds of on-vehicle devices to be received at the antenna 14a to send the verification signal and the identification signal to the central controller 12.

Note that, the transmitter-receiver 14 has at least an antenna for transmitting therethrough a control signal in the form of a radio wave.

In addition, as shown in FIG. 1, the various kinds of on-vehicle electric devices such as turn signal lamps, a brake lamp and front lamps are supplied with an electric power from an on-vehicle battery 18. An electric device controller 16 as will be described later carries out control for operations of the various kinds of on-vehicle electric devices including a switching function of turning ON/OFF of supply of an electric power.

The electric device controllers 16 are illustrated in the form of the U-TAGs 16a to 16g in FIG. 1, and as shown in FIG. 3, each of them has an antenna 20, a modulation/demodulation circuit 22, and a signal generation circuit 24.

The antenna 20 is an antenna for receiving a radio wave from the antenna 14a and for transmitting therethrough a high frequency signal sent from the modulation/demodulation circuit 22 in the form of a radio wave.

The modulation/demodulation circuit 22 is a circuit for demodulating the high frequency signal received at the antenna 20 to reproduce a transmission signal to send the resultant transmission signal to the signal generation circuit 24, and for modulating a carrier generated in an oscillation circuit (not shown) on the basis of a verification signal and an identification signal sent from the signal generation circuit 24 to generate a high frequency signal to send the resultant high frequency signal to the antenna 20.

The signal generation circuit 24 is a circuit for separating the transmission signal sent from the modulation/demodulation circuit 22 into a control signal for an on-vehicle electric device, and an identification signal containing therein a car body ID signal, a device ID signal, a WARD signal, and the like to compare and collate the resultant identification signals with car body ID and device ID stored in the circuit 24 itself, and for, when agreement between them is obtained, sending a control signal to corresponding one of the on-vehicle devices connected in one-to-one correspondence to the electric device controllers 16. On the other hand, when no agreement between them is obtained as a result of the comparison, no control signal is sent to the corresponding one of the on-vehicle electric devices.

With respect to the control signal sent to the corresponding one of the on-vehicle electric devices, for example, in the case of the control signal used to start flash of the turn signal lamp for turning to the left, a driving circuit of the turn signal lamp is driven to start the flash of the turn signal lamp. On the other hand, in the case of the control signal used to stop the flash of the turn signal lamp, the operation of the driving circuit is stopped to stop the flash of the turn signal lamp.

The control for an operation of an on-vehicle electric device is not limited to turn-ON or turn-OFF of an operation, and hence one operation mode is selected from operation modes which are set in multi-stages in accordance with the control, to activate the on-vehicle device.

In a case where an on-vehicle electric device is a device which is turned ON or OFF in accordance with a control signal, for example, as in a vehicle illumination device or the like, as shown in FIG. 4, the signal generation circuit 24 is preferably configured so as to have a control circuit 24a, and an FET-SW circuit 24b. The electric device controller configured so as to have the signal generation circuit 24 including the signal generation circuit 24a and the FET-SW circuit 24b receives a signal from the central controller 12 to discriminate a WARD signal, a car body ID signal, a device ID signal for an on-vehicle electric device as an object of control, and a control signal from the received signal, and when an on-vehicle electric device specified with the discriminated device ID signal is corresponding one of on-vehicle electric devices connected in one-to-one correspondence, outputs a reset signal used to reset supply of an electric power to an on-vehicle electric device to be controlled before predetermined control information based on the discriminated control signal is outputted to the electric device. Such an electric device controller corresponds to a power supply controller in the present invention.

The control circuit 24a is a circuit serving to discriminate car body ID and device ID from the received signal to recognize an on-vehicle device to be operated to issue an ON/OFF instruction.

The FET-SW circuit 24b is a circuit for, in accordance with the ON/OFF instruction, changing a state of a power supply change-over switch 24c over to the other state to operate an on-vehicle electric device, or to stop an operation of the on-vehicle electric device.

In addition, a communication protocol until output of the ON/OFF instruction after recognition of car body ID, and device ID in the control circuit 24a is shown in FIG. 5.

As shown in FIG. 5, the control circuit 24a detects an ON/OFF operation instruction for various kinds of on-vehicle electric devices in three stages of recognition of ID, recognition of a WARD signal, and recognition of an ON/OFF signal so as not to cause malfunction to output the detection results.

The ID contains therein car body ID, and device ID used to specify an on-vehicle electric device. The car body ID is ID with which if another vehicle should come close to the side of a vehicle concerned, a radio wave radiated from the vehicle concerned is specified so as not to be influenced by a radio wave radiated by another vehicle, or so as not to exert an influence on another vehicle.

The device ID is ID for specifying which of various kinds of on-vehicle electric devices (16a to 16g) the on-vehicle electric device concerned is.

There is a possibility that various kinds of on-vehicle electric devices may undergo malfunction due to noises if only the above ID is used. Thus, the WARD signal is a recognition signal for showing that the signal is a true signal instructing corresponding one of various kinds of on-vehicle electric devices to be operated.

Though a format of the WARD signal is not especially limited, it is exemplified that as described above, for example, after Os are sent by 10 bits, 1s are sent by 10 bits, and this block is repeated by three blocks. Since such a signal is most unlikely in communication, when this signal is detected, it is possible to verify that the signal concerned is surely a signal instructing corresponding one of various kinds of on-vehicle electric devices to be operated.

After it is verified on the basis of the WARD signal that the signal concerned is a true signal instructing corresponding one of various kinds of on-vehicle electric devices to be operated, next, it is verified that the signal concerned is a control signal for turn-ON or turn-OFF of an on-vehicle electric device. At this time, even when the control signal concerned is a control signal to either turn ON or OFF an on-vehicle electric device, first of all, after the on-vehicle electric device is turned OFF, an instructed control signal is outputted. That is to say, if the control signal concerned is a control signal to turn ON an on-vehicle electric device, then the control signal is outputted in the order of OFF and ON, while if the control signal concerned is a control signal to turn OFF an on-vehicle electric device, then the control signal is outputted in the order of OFF and OFF.

Since a control signal is outputted after a control signal for turn-OFF is outputted, i.e., an on-vehicle electric device to be operated is reset, it is possible to surely prevent malfunction.

The FET-SW circuit 24b of the electric device controller 16, when receiving the control signal for turn-OFF (actually, OFF and OFF) from the control circuit 24a, changes a state of the power supply change-over switch over to an turn-OFF state, while the FET-SW circuit 24b, when receiving an ON signal (actually, OFF and ON) from the control circuit 24a, changes a state of the power supply change-over switch 24c over to a turn-ON state to turn ON an instructed on-vehicle electric device.

In such a manner, after an on-vehicle electric device to be operated is specified on the basis of the car body ID and the device ID, a signal concerned is verified as a true signal by the WARD signal. When an ON/OFF signal is intended to be outputted, first of all, the OFF signal is outputted to reset the on-vehicle electric device to be operated, and the ON/OFF signal is then outputted. Consequently, malfunction of any of devices can be prevented to allow operations of various kinds of on-vehicle devices to be certainly ensured.

The electric device controller capable of preventing malfunction of on-vehicle electric devices in such a manner can be used to control, in addition to operations of the on-vehicle electric devices, operations of electric devices when the electric devices provided in various places within a building are controlled by a central controller. This also leads to simple wiring, and malfunction of any of devices can be prevented.

Note that, the electric device controllers 16 are formed on a chip of a Ga-As substrate or the like using the monolithic microwave integrated circuit (MMIC) technique as the known IC design technique so that its circuits are formed in the form of an IC. Then, this chip is mounted on a mounting board having a size of several tens mm x several tens mm for example to be finished to a very light weight of 5 g for example.

Here, the radio wave radiated from the antenna 14a is a weak radio wave having power consumption of 200 mW or the like for example, and its transmittable/receivable range is set within 10 m for example. In addition, the radio wave radiated from the antenna 14a is a microwave having a frequency band of 2.45 to 5.8 GHz and 22 to 28 GHz for example. Or, that radio wave may also be an ultrashort wave having a frequency band within 315 MHz, for example, as a center frequency.

Since the control system 10 uses the radio wave having the microwave band or the ultrashort wave band, sizes of the antenna 20 and the circuits can be miniaturized to allow compact electric device controllers 16 to be formed. Note that, the antenna 20 may be a patch antenna such as a microstrip antenna in addition to a pole-like antenna.

In such a control system 10, the control signal and the identification signals are generated in the central controller 12 in accordance with an instruction issued by a driver or an operator to be transmitted in the form of a radio wave from the transmitter-receiver 14.

On the other hand, in the electric device controller 16, the radio wave is received to separate the control signal and the identification signal from each other to reproduce those signals. Then, a car body ID signal and a device ID signal contained in the identification signal, and car body ID and device ID obtained from the WARD signal are compared with car body ID, device ID and WARD stored in the electric device controller 16. When agreement between them is obtained as a result of the comparison, the control signal is sent to an on-vehicle electric device connected to the electric device controller 16 to control the on-vehicle electric device. In a case where the control signal is a signal for turn-ON or turn-OFF of the on-vehicle electric device, when the ON/OFF signal is intended to be outputted, first of all, an OFF signal is outputted to reset the on-vehicle electric device, and the ON/OFF signal is then outputted.

Then, after the on-vehicle electric device is controlled, a verification signal is generated in the on-vehicle electric device to be sent to the electric device controller 16. In the signal generation circuit 24, a transmission signal is generated from the verification signal sent to the circuit 24, and the identification signal containing therein the car body ID signal, the device ID signal, the WARD signal and the like stored in the circuit 24 to be transmitted in the form of a radio wave from the antenna 20 towards the transmitter-receiver 14 through the modulation/demodulation circuit 22.

In the transmitter-receiver 14, the verification signal and the identification signal received by the transmitter-receiver 14 are reproduced to be sent to the central controller 12.

As a result, in the central controller 12, it is possible to verify that a desired on-vehicle electric device has been controlled in accordance with the control signal, and the effect that an operation of the on-vehicle electric device has been controlled is displayed on a display panel (not shown) or the like.

Note that, the central controller 12 may send the control signal to the transmitter-receiver 14 for a fixed period of time until the verification signal is obtained in the central controller 12 in order to transmit that control signal. In this connection, in the antennas 14a and 20, transmission and reception of the control signal and the verification signal are intermittently carried out.

Since those signals are transmitted in a wireless manner from the transmitter-receiver 14 to the electric device controllers 16, the wiring of the cables for the various kinds of on-vehicle electric devices mounted on a vehicle can be reduced, a weight and a cost of the vehicle can be reduced, and also mounting of the system to the vehicle can be readily carried out.

In the above-mentioned control system 10, a case where the central controller 12 is the central control unit in the present invention, and the control signals for control of the on-vehicle electric devices are transmitted from the central controller 12 to the electric device controllers 16 has been described as one embodiment. However, the present invention may have an electric device controller which has an imaging device (camera), as will be described below, for capturing an image of the circumference of a vehicle as an on-vehicle electric device, and which serves to transmit a signal generated in this on-vehicle electric device to an image controller as a central control unit through a transmitter-receiver.

FIG. 6 shows a schematic configuration of an on-vehicle driving support image display system (hereinafter referred to as the system of the present invention) 40 as another embodiment of the network system of on-vehicle electric devices of the present invention.

The system 40 of the present invention is configured so as to have image transmitters 51 to 56 including six imaging devices each mounted as an on-vehicle electric device to a vehicle 50, an image controller 80 serving as a transmitter-receiver and a central control unit, and an imaging display unit 94 connected in a wired manner to the image controller 80.

FIG. 7 shows a configuration of the image transmitter 51, FIG. 8 shows a configuration of the image controller 80, and FIG. 9 shows one example of a display screen of an image display device 94. Note that, since a configuration of each of the image transmitters 52 to 56 is substantially the same as that of the image transmitter 51 shown in FIG. 7, its illustration is omitted here.

The image transmitters 51 to 56 are mounted to respective portions of the vehicle 50, and each of them serves to capture an image of the circumference of the vehicle 50 to transmit a resultant image signal as the captured image information to the image controller 80. In the system 40 of the present invention, the image transmitter 51 is installed on the left-hand side in a front side of the vehicle as a travelling direction of the vehicle 50, and the image transmitter 52 is installed on the right-hand side in the front side of the vehicle. In addition, the image transmitter 53 is installed on a side face on the left-hand side of the travelling direction, and the image transmitter 54 is installed on a side face on the right-hand side of the travelling direction. Moreover, the image transmitter 55 is installed at a central portion in a back side of the vehicle opposite to the travelling direction, and the image transmitter 56 is installed at a central portion in the front side of the vehicle.

The image transmitter 51 is configured so as to have an imaging device 56 and a transmission unit 60.

The imaging device 56 is a unit which is constituted by a compact CCD camera formed in the form of one chip so as to have a CCD imaging device, and which senses light with a wavelength of 400 to 700 nm to convert the light thus sensed into an analog electrical signal.

The transmission unit 60 corresponds to the electric device controller in the present invention, and is configured to have an A/D conversion unit 62, an image data processing unit 64, an identification signal generation unit 66, a modulation unit 68, and a transmitting antenna 70. The transmission unit 60 is formed in the form of an IC with its portions using the technique of the monolithic microwave integrated circuit (MMIC) or the hybrid microwave integrated circuit (HMIC) for example to be mounted as a chip of 2 mm square onto a circular mounting board with 25 mm diameter to thereby form a very light and compact circuit with 5 g weight. In addition, a radio wave radiated from the antenna 70 is a weak radio wave having a consumed output equal to or lower than 200 mW for example, and its transmittable/receivable range is set less than 10 m for example.

The A/D conversion unit 62 is a unit for converting an analog electrical signal received from the imaging device 56 into a digital electrical signal.

The image data processing unit 64 is a unit for subjecting the digital electrical signal received from the A/D conversion unit 62 to various kinds of signal processings to obtain an image signal to send the resultant image signal to the modulation unit 68.

The identification signal generation unit 66 is a unit for generating an identification signal containing therein identification information specific to the vehicle 50 and identification information specific to the image transmitter 51. The specific identification information means car body ID as information such as a car body authorization number and a code specifically assigned to the vehicle 50, and device ID as information such as an authorization number and a code specifically assigned to the image transmitter 11, and is expressed in the form of an identification signal containing Os or 1s of several tens of bits.

The modulation unit 68 is a unit for generating a carrier signal to modulate the resultant carrier signal using the image signal sent from the image data processing unit 64 and the identification signal sent from the identification signal generation unit 66 to send the modulated carrier signal to the transmitting antenna 70.

Note that, the carrier signal is a signal having a fixed frequency band falling within a range of 22 to 28 GHz. In addition, for the frequencies of the carrier signals of the image transmitters 51 to 56, fixed frequency bands which are different among the image transmitters are previously set.

The transmitting antenna 70 is a portion for radiating the carrier signal modulated in the modulation unit 68 in the form of a radio wave. Such radiation of the radio wave is usually continuously carried out.

The image transmitters 52 to 55 have substantially the same configuration. That is to say, the image transmitters 52 to 55 have the same configuration except that an image pickup unit of the image transmitter 56 is constituted by an infrared camera. The infrared camera has an imaging device capable of capturing infrared rays so that an analog electrical signal is outputted in correspondence to a quantity of inputted infrared rays. The infrared camera, for example, is effective in capturing an image of an exhaust gas discharged from a vehicle travelling in front of the vehicle 50, or to capture an image of a pedestrian which can not be captured at night with a CCD camera.

The image controller 80 shown in FIG. 8 is configured to have a receiving antenna 82, a hopping pattern oscillation circuit 84, a mixing unit 86, a demodulation unit 88, a display setting unit 90, and an image processing unit 92.

Here, the receiving antenna 82, the hopping pattern oscillation circuit 84, the mixing unit 86, and the demodulation unit 88 correspond to a transmitter-receiver in the present invention, and the display setting unit 90 and the image processing unit 92 correspond to a central control unit in the present invention.

The receiving antenna 82 is a portion for receiving the radio wave continuously radiated from the transmitting antenna 70 of the image transmitter 51, and the radio-waves continuously radiated from the image transmitters 52 to 56.

The hopping pattern oscillation unit 84 is a unit for successively changing high frequency signals having different frequencies at fixed time intervals to repeatedly generate the high frequency signals. Since the system 40 of the present invention has the six image transmitters 51 to 56 to radiate the six radio waves having different frequency bands, the hopping pattern oscillation unit 84 generates the high frequency signals while successively changing the six kinds of high frequency signals in accordance with a previously set hopping pattern in correspondence to these frequency bands. These six kinds of high frequency signals having different frequency bands are used to convert the carrier signal of six different high frequency signals transmitted from the image transmitters 51 to 56 into an intermediate frequency signal.

The mixing unit 86 is a unit connected to an output side of the receiving antenna 82 and the hopping pattern oscillation unit 84 for mixing the carrier signal carrying thereon the image signal and the identification signal received at the receiving antenna 82 with the above-mentioned high frequency signals outputted from the hopping pattern oscillation unit 84 to convert the resultant signal into an intermediate frequency signal to send the resultant intermediate frequency signal to the demodulation unit 88.

The mixing unit 86 generates the intermediate frequency signal using the high frequency signals generated by successively changing the frequency bands in accordance with the hopping pattern. Thus, the intermediate frequency signals transmitted and generated from the image transmitters 51 to 56 are successively sent to the demodulation unit 88 in accordance with the hopping pattern.

In such a manner, the frequencies of the high frequency signals are successively changed using the hopping pattern, and the intermediate frequency signal having the image signal contained in any of the carrier signals is generated from the six frequency carrier signals having different frequencies. Thus, a plurality of image signals can be obtained in accordance with the hopping pattern.

The demodulation unit 88 is a unit for reproducing an image signal indicating image information and an identification signal indicating identification information from the intermediate frequency signal sent from the mixing unit 86 to send the reproduced image signal and identification signal to the image processing unit 92.

The display setting unit 90 is a unit for sending the contents of an instruction to display an image of image support information complying with an instruction issued by a driver of the vehicle 50 on the image display device 94 to the image processing unit 92. As for an instruction issued by a driver, for example, there is exemplified an instruction to display only an image of the circumference behind the vehicle, which is sent from the image transmitter 55 arranged on a central portion in a back side of the vehicle, or an instruction to display all the images sent from the image transmitters 51 to 56 on a display screen of the image display device 94 divided in six parts.

The image processing unit 92 is a unit for receiving an image signal and an identification signal reproduced in the demodulation unit 88 to extract identification information (car body ID) of the vehicle 10 contained in the identification signal, and identification information (device ID) of the image transmitters 51 to 56 contained in the identification signal to process the image signal.

Here, the image processing unit 92 stores therein identification information (car body ID) specifically assigned to the vehicle 10, and identification information (device ID) specifically assigned to the image transmitters 51 to 56, and compares and collates received identification information of the vehicle 10 with the identification information of the vehicle 10 stored in the unit 92. If the received identification information of the vehicle 10 agrees with the identification information of the vehicle 50 stored in the unit 92 as a result of the comparison, then the image processing unit 92 processes the image signals to generate an image signal to be sent to the image display device 94 in accordance with an image display pattern set in the display setting unit 90, or in accordance with an image display pattern previously set in the image processing unit 90.

In such a manner, since the received image signal is processed in accordance with the image display pattern, it is possible to select image information effective for driving.

Note that, if no agreement between both the identification information is obtained, then the received image information is abandoned.

Thus, it is possible to prevent radio interference between a radio wave of the vehicle 50 and a radio wave of other vehicle including the same system as that of the system 40 of the present invention.

Note that, the identification information (device ID) specific to the respective image transmitters 51 to 56 is used to judge which image transmitter the image concerned is transmitted from, to generate a signal corresponding to the image display pattern when the image processing is executed in the image processing unit 62.

In such a manner, the identification signal is transmitted together with the image signal, whereby the image information can be obtained without confusing the source of the transmission.

The image processing unit 92 sends the generated image signal to the image display device 94.

The image display device 94 is a unit for displaying information of the sent image signal on a display screen of the image display device 94.

FIG. 9 shows one example of the display screen of the image display device 94.

An image captured with the image transmitter 53 installed on a side face on the left-hand side in a travelling direction of the vehicle 50 is displayed on a portion of an area L on the left-hand side in the figure, an image captured with the image transmitter 54 installed on a side face on the right-hand side in the travelling direction of the vehicle 50 is displayed on a portion of an area R on the right-hand side in the figure, an image captured with the image transmitter 56 installed at a central portion in the front side of the vehicle 50 is displayed on a portion of an area U on the upper side-in the figure, and an image captured with the image transmitter 55 installed on the back side of the vehicle 50 is displayed on a portion of an area D on the lower side in the figure.

As for an image structure on the display screen of the image display device 94, in addition to the image structure shown in FIG. 9, there may also be adopted an image structure such that only an image captured with one image transmitter of the image transmitters 51 to 56 is displayed, images captured with a plurality of image transmitters are displayed, or all images captured with the image transmitters 51 to 56 are displayed on the screen divided in six parts in accordance with the image display pattern set in the display setting unit 90, or in accordance with the image display pattern previously set in the image processing unit 92.

In such a manner, the transmission unit 60, as described above, is formed in the compact form of circuits, and the image device 56 is also constituted by the compact CCD camera or the like. Thus, the image transmitters 51 to 56 themselves are compact devices, and hence can be very readily installed in desired positions of the vehicle 50. Moreover, any of a coaxial cable for wiring and an optical fiber cable becomes unnecessary because of the wireless transmission.

A description is given of an operation of the system 40 of the present invention. First of all, if the CCD cameras or the infrared cameras of the imaging device 56 in the image transmitter 51 and the imaging devices in the image transmitters 52 to 56 capture images of the circumference of the vehicle 50, then each of the images captured with the CCD cameras or the infrared cameras is converted into an analog electrical signal. The analog electrical signal is then converted into a digital electrical signal by the A/D conversion unit 62 to be inputted to the image data processing unit 64.

In the image data processing unit 64, the digital electrical signal is subjected to various kinds of signal processings such as fault correction and a gamma correction in the image data processing unit 64 to generate an image signal. The generated image signal is then inputted to the modulation unit 68. In the image data processing unit 64, processing for compressing an image may be executed. In addition, the identification signal is generated by the identification signal generation unit 66 to be inputted to the modulation unit 68. In the modulation unit 68, the high frequency carrier signals having different frequencies previously set for the image transmitters 51 to 56 are modulated by using the image signal and the identification signal, and the modulated carrier signals are then transmitted in the form of a radio wave from the transmitting antenna 70 to the receiving antenna 82 of the image controller 80. Such carrier signals are usually continuously transmitted from the image transmitters 51 to 56.

The radio wave of the six mixed carrier signals transmitted from the image transmitters 51 to 56 is then received at the receiving antenna 82 of the image controller 80, and the mixed carrier signals are then sent to the mixing unit 86. The mixed carrier signals sent to the mixing unit 86 are successively mixed with the six kinds of high frequency signals which have been changed in accordance with the order based on a predetermined hopping pattern to be repeatedly generated by the hopping pattern oscillation unit 84. An image signal indicating image information transmitted from any one of the image transmitters 51 to 56, and an identification signal indicating identification information transmitted therefrom are contained in an intermediate frequency signal generated through the mixing process. Such an intermediate frequency signal is sent to the demodulation unit 88.

The demodulation unit 88 reproduces the image signals and the identification signals from the received intermediate frequency signal to successively and repeatedly send the reproduced image signals and identification signals to the image processing unit 92. In such a manner, the image signals and the identification signals of the image transmitters 51 to 56 are successively reproduced in accordance with the order based on the hopping pattern.

In the image processing unit 92, the identification information (car body ID) specific to the vehicle 50 which is sent to the unit 92 is compared and collated with the identification information (car body ID) of the vehicle 50 stored in the unit 92. If agreement between both the identification information is obtained, then the image signals transmitted from the image transmitters 51 to 56 are composed in accordance with the image display pattern set in the display setting unit 90, or in accordance with the image display pattern previously set in the image processing unit 92 while utilizing the received identification information (device ID) specific to the respective image transmitters 51 to 56 to generate an image signal for image display. The generated image signal is then sent to the image display device 94. Information of the image signal is displayed on the image display device 94 in accordance with the image display pattern instructed by the display setting unit 90, or in accordance with the previously set image display pattern.

In such a manner, the images captured with the image transmitters 51 to 56 are displayed on the image display device 94, and hence a driver can get image support information of the circumference of the vehicle which is useful for driving of the vehicle 50.

In addition, in the system of the present invention, the received image information is composed in accordance with the image display pattern set by the image setting unit 90, or in accordance with the image display pattern previously set in the image processing unit 92. However, the present invention is not limited to this process. Hence, information required for safe driving of the vehicle 50 may also be detected from the received image information to display this information on the image display device 94.

For example, in the image processing unit 92, an obstacle on the road which becomes an obstacle to travelling of the vehicle 50 is detected from the received image information by utilizing a technique for pattern recognition, and a distance between the detected obstacle and the vehicle 50, and an approach speed at which the obstacle is coming close to the vehicle 50 are calculated to estimate and detect a degree of risk at which the vehicle 50 and the obstacle may collide with each other from the distance between the obstacle and the vehicle 50 and the approach speed. When it is estimated that the degree of risk is high, risk information for calling a vehicle driver's attention to danger is displayed on the image display device 94. The risk information to be displayed on the image display device 94 may be "collision warning!" for example as shown in FIG. 10. Of course, the risk information may also be given in the form of a voice.

In addition, a position of the vehicle 50 is judged from side lines on both sides of a road and a center line on a center side of the road images of which have been captured. Then, when it is judged that the vehicle 50 comes near a road-shoulder too much, the risk information for calling a vehicle driver's attention to danger is displayed on the image display device 94. On the other hand, when it is judged that the vehicle 50 comes near a center too much, the information to that effect is displayed. In this case, the risk information to be displayed on the image display device 94 may be "Beware of coming near too much!" for example. Of course, the risk information may also be given in the form of a voice.

In addition, in the system of the present invention, the image information and the identification information sent from the image transmitters 51 to 56 are transmitted to the image controller 80 in a state of being carried on the high frequency carrier signal having a fixed frequency. However, the frequency of the carrier signal may be changed at random to carry the image information and the identification information.

Also, in the system of the present invention, the image pickup unit of each of the image transmitters 51 to 55 is a CCD camera, and the image pickup unit of the image transmitter 56 is the infrared camera. However, the image pickup unit 56 of the present invention is not limited to the CCD camera or the infrared camera. For example, a camera using a CMOS type imaging device may also be adopted.

In addition, on-vehicle positions of the image transmitters are not limited in the system of the present invention. Also, while the number of image transmitters mounted on the vehicle 50 is six in the system of the present invention, the number of image transmitters mounted on the vehicle 50 is not especially limited, and a plurality of image transmitters have to be mounted on the vehicle 50.

In addition, the on-vehicle driving support image display system of the present invention can be mounted on any of transportation means such as an automobile, a bus, an autotruck, a train, or a monorail car.

As described above, the network system of on-vehicle electric devices of the present invention can be applied to the on-vehicle driving support image display system.

Each of the control system 10 and the on-vehicle driving support image display system 40 includes the central control unit for transmitting or receiving a radio wave at one antenna, and the transmitter-receiver connected in a wired manner. However, a transmitter-receiver including a radio leakage device as will be described below may be used instead of the transmitter-receiver.

FIG. 11 is a block diagram showing a schematic configuration of a network system 100 using radio leakage devices in the network system of on-vehicle electric devices of the present invention.

The network system 100 is configured so as to mainly have a control unit 110, on-vehicle electric components 120a, 120b, ... such as an illumination lamp and a warning horn, and a cable 130 for high frequencies.

The control unit 110 is a unit which is installed in a predetermined position within a vehicle, e.g., in the vicinity of a driver's seat of a vehicle, or the like, and which serves to carry out control for the whole vehicle including the on-vehicle electric components 120a, 120b, .... The control unit 110 corresponds to a central control unit in the present invention, and is configured so as to have a signal input unit 111, a modulation/demodulation unit 112, a signal transmission/reception unit 113 and a CPU 114.

The signal input unit 111 is a unit for receiving a signal from a switch 140 provided in the vicinity of a driver's seat in order to manipulate the on-vehicle electric components 120a, 120b, .... Note that, the reception of the signal from the switch 140 may be carried out in a wired manner. However, as will be described later, similarly to the on-vehicle electric components 120a, 120b, ..., carrying out the reception of the signal from the switch 140 in a wireless manner through the cable 130 for high frequencies is rather preferable from a viewpoint of simple wiring.

The modulation/demodulation unit 112 is a unit for modulating or demodulating an inputted signal, and the signal transmission/reception unit 113 is a unit for sending a signal modulated in the modulation/demodulation unit 112 from the signal input unit 111 to the cable 130 for high frequencies, and for sending the signal received from the cable 130 for high frequencies to the modulation/demodulation unit 112.

In addition, the CPU 114 is a unit for controlling these units provided within the control unit 110.

The cable 130 for high frequencies is a cable such as a coaxial cable through which signals are transmitted between the control unit 110 and the on-vehicle electric components 120a, 120b, ..., and which is shielded so as not to leak a radio wave. Its installation position is not especially intended to be limited, and the cable may be distributed in a loop-like shape along nearly the outer periphery within a vehicle.

The cable 130 for high frequencies is also distributed so as to pass through positions close to the on-vehicle electric components 120a, 120b, .... Then, the radio leakage devices 132a, 132b, ... which serve to send signals to the on-vehicle electric components 120a, 120b, ..., respectively, are provided in series along the cable 130 for high frequencies in the positions of the cable 130 for high frequencies close to the on-vehicle electric components 120a, 120b, .... The radio leakage devices 132a, 132b, ... will be described later.

The on-vehicle electric components 120a, 120b, ... include on-vehicle electric device controllers 121a, 121b, ... and various kinds of on-vehicle electric devices such as the illumination lamp 122a, and the warning horn 122b, respectively. The electric device controllers 121a, 121b, ... correspond to electric device controllers in the present invention, and include antennas 123a, 123b, ..., modulation/demodulation units 124a, 124b, ..., electric device controllers 125a, 125b, ..., and CPUs 126a, 126b, ..., respectively.

The antennas 123a, 123b, ... are portions for transmitting/receiving control signals to/from the radio leakage devices 132a, 132b, ... via radio waves, respectively. The modulation/demodulation units 124a, 124b, ... are units for modulating/demodulating signals, respectively. In addition, the electric device controllers 125a, 125b, ... are units for controlling the on-vehicle electric devices in accordance with modulated signals, respectively.

In addition, the network system 100 is provided with a power supply unit 150 for supplying a power from a battery to the control unit 110, the on-vehicle electric components 120a, 120b, ..., and the like. Thus, the electric power is supplied from the power supply unit 150 to the devices within the vehicle through a power supply wiring 152.

A schematic configuration of the radio leakage device 132a provided in a predetermined position of the cable 130 for high frequencies is shown in FIG. 12. Note that, since this configuration is also applied to each of the radio leakage devices 132b, ..., only the radio leakage device 132a will now be described.

The radio leakage device 132a is installed in a position of the cable 130 for high frequencies close to the on-vehicle electric component 120a, and includes a leakage control unit 133a and an antenna 134a.

The leakage control unit 133a is configured so as to have a signal transmission/reception unit 135a for receiving a control signal from the cable 130 for high frequencies, an amplification unit 136a for amplifying the received signal, and a signal transmission/reception unit 137a for sending the amplified signal to the antenna 134a.

Here, the antenna 134a has only to output a weak radio wave to an extremely narrow area in the circumference of the antenna 134a, and hence is not necessarily a pole-like antenna having a form as shown in the figure. For example, the antenna 134a may be a patch antenna such as a microstrip antenna. The on-vehicle electric component 120a is installed close to the cable 130 for high frequencies so as to be located within a range that a radio wave radiated from the antenna 134a reaches. The antenna 123a of the electric component 120a receives the radio wave radiated from the antenna 134a of the radio leakage device 132a, and the illumination lamp 122a is controlled in accordance with a signal of that radio wave.

In addition, another example of the radio leakage device 132a is shown in FIG. 13.

An radio leakage device 142a shown in FIG. 13 is constituted by a leakage unit 143a having the same function as that of a so-called leakage cable, and is connected to a half-way point of the cable 130 for high frequencies through sockets 144a. In addition, the leakage unit 143a has a opening portion (slot portion) 145a shaped like a Chinese character of "8", for example, in its surface coating. Then, a radio wave leaks to the circumference through the opening portion 145a. If the above leakage unit 143a is used, then there is no need to secure an installation space, no consideration needs to be made of weight, and the installation is easy to carry out.

An operation of this embodiment will hereinbelow be described.

A description will now be given with respect to a case where, for example, the illumination lamp 122a is lighted.

At the time when a driver has inputted an instruction for manipulation by turning on the switch 140 so as to light the illumination lamp 122a, the signal input unit 111 of the control unit 110 receives a signal indicating that the illumination lamp 122a will be lighted through the switch 140. A control signal for a lighting instruction inputted to the signal input unit 111 is modulated in the modulation/demodulation unit 112 to be sent from the signal transmission/reception unit 113 to the cable 130 for high frequencies.

The control signal sent to the cable 130 for high frequencies is then received in the signal transmission/reception unit 135a in the radio leakage device 132a to be amplified in the amplification unit 136a to be outputted from the signal transmission/reception unit 137a through the antenna 134a.

An radio wave of the control signal is received at the antenna 123a of the electric device controller 121a. The received control signal is then demodulated in the modulation/demodulation unit 124a, and the resultant control signal to instruct the illumination lamp 122a to be lighted is sent from the electric device controller 125a to light the illumination lamp 122a.

In such a manner, in this embodiment, the radio leakage devices are installed only in places where the leakage of the radio wave from the normal cable for high frequencies is required without using an expensive and heavy leakage cable for a cable for signal transmission, whereby the wiring can be simplified, the cost and the weight can be reduced, and the control signals can be surely transmitted/received to/from the on-vehicle electric components to allow the on-vehicle electric components to be surely operated.

In addition, since the radio leakage device may be installed in necessary portions of a coaxial cable or the like later, or may be incorporated in a connector to be used, even when an on-vehicle unit is added later in compliance with demands of a customer, the radio leakage device can be readily added. In particular, in a case where a leakage unit as shown in FIG. 13 is used, the installation becomes easier.

Even in the above network system 100 of on-vehicle electric devices, there may be adopted a configuration such that, as described above, the device ID signal, the car body ID signal, and the WARD signal stored and held in the signal input unit 111 are generated together with the control signal to be transmitted, and in the electric device controllers 121a, 121b, ... receiving this signal, the reset signal to reset the on-vehicle electric device to be controlled is outputted before predetermined control information based on the control signal is outputted to the on-vehicle electric device specified with the device ID signal.

That is to say, each of the electric device controllers 125a, 125b, ... shown in FIG. 11 can be configured so as to have a signal generation circuit having a control circuit and an FET-SW circuit identical to the signal generation circuit 24 having the control circuit 24a and the FET-SW circuit 24b shown in FIG. 4.

The control circuit is a circuit, as described above, serving to fetch the car body ID signal, the device ID signal and the WARD signal from the received signal to discriminate the car body ID and the device ID to recognize the on-vehicle electric device to be operated to issue an ON/OFF instruction.

The FET-SW circuit is a circuit where, as described above, in accordance with the ON/OFF instruction, a state of the power supply change-over switch is changed over to the other state to operate an on-vehicle electric device or to stop an operation of the on-vehicle electric device.

Consequently, each of the electric device controllers 125a, 125b, ... can receive the identification signal and the WARD signal of the on-vehicle electric device as an object of control together with the control signal, and can detect the ON/OFF signal to instruct corresponding one of various kinds of on-vehicle electric devices to be operated without causing malfunction in the three stages of recognition of ID, recognition of the WARD signal, and recognition of the ON/OFF signal as shown in FIG. 5 to output the ON/OFF signal.

In this case, after it is verified on the basis of the WARD signal that a signal concerned is a true signal to instruct corresponding one of the various kinds of on-vehicle electric devices to be operated, next, it is verified whether or not the signal concerned is the control signal for turn-ON or turn-OFF of the on-vehicle electric device. At this time, even if the signal concerned corresponds to any of an instruction for turn-ON and an instruction for turn-OFF, first of all, after the on-vehicle electric device is put in an OFF state, the instructed control signal is outputted. That is to say, if the control signal concerned corresponds to the instruction for turn-ON, then the control signal is outputted in the order of OFF and ON, while if the control signal concerned corresponds to the instruction for turn-OFF, then the control signal is outputted in the order of OFF and OFF.

In such a manner, since first of all, an instruction for turn-OFF is issued, i.e., the on-vehicle electric device is reset and then the control signal is outputted, malfunction can be surely prevented.

Note that, the power supply controller of the present invention for resetting the on-vehicle electric device before the control signal is outputted as described above can be used in a system for carrying out wireless communication using a leakage cable as well as a system for carrying out wireless communication between antennas and a system for carrying out wireless communication using a leakage device.

### INDUSTRIAL APPLICABILITY

As set forth hereinabove, according to the network system of on-vehicle electric devices and the power supply controller of the present invention, the number of wirings of the cables of the various kinds of on-vehicle electric devices mounted on the vehicle can be reduced, the weight and the cost of the vehicle can be reduced, the installation on the vehicle can be made easy, and the control for the various kinds of on-vehicle electric devices can be accurately carried out.

## Claims

1. A network system of on-vehicle electric devices in which a central control unit mounted on a vehicle and a plurality of on-vehicle electric devices are connected, the network system comprising:
one transmitter-receiver mounted on the vehicle and connected to the central control unit in a wired manner, the one transmitter-receiver including an antenna for transmitting/receiving therethrough a signal in a wireless manner; and
a plurality of electric device controllers provided in one-to-one correspondence to the plurality of on-vehicle electric devices, each of the electric device controllers including an antenna for transmitting/receiving therethrough a signal to/from the transmitter-receiver in a wireless manner so as to control corresponding one of-the on-vehicle electric devices on the basis of the received signal or so as to process a signal generated by the corresponding one of the on-vehicle electric devices to transmit the processed signal to the transmitter-receiver.

2. The network system of on-vehicle electric devices according to claim 1, wherein when the transmitter-receiver transmits a control signal for controlling corresponding one of the on-vehicle electric devices to corresponding one of the electric device controllers, at least an identification signal of the on-vehicle electric device as an object of the control is transmitted together with the control signal.

3. The network system of on-vehicle electric devices according to claim 2, wherein the transmitter-receiver further transmits a WARD signal.

4. The network system of on-vehicle electric devices according to claim 2 or 3, wherein when the on-vehicle electric device specified with the identification signal is corresponding one of the on-vehicle electric devices provided in one-to-one correspondence to the electric device controllers, before predetermined control information based on the control signal is outputted to the corresponding one of the on-vehicle electric devices, corresponding one of the electric device controllers outputs a reset signal to reset the on-vehicle electric device to be controlled.

5. The network system of on-vehicle electric devices according to claim 1, wherein
an image display device mounted on the vehicle for supporting driving of the vehicle is connected to the central control unit;
one of the on-vehicle electric devices includes an image pickup unit for capturing an image of the circumference of the vehicle from the vehicle, and an image signal obtained from the image pickup unit is transmitted to corresponding one of the electric device controllers so as for the image signal to be transmitted to the central control unit through the corresponding one of the electric device controllers and the transmitter-receiver;
the central control unit processes the image signal sent from the transmitter-receiver; and
the image display device displays thereon the image of the circumference of the vehicle on the basis of the processed image signal.

6. The network system of on-vehicle electric devices according to claim 5, wherein the central control unit processes the image signal on the basis of a set image display pattern.

7. The network system of on-vehicle electric devices according to claim 5 or 6, wherein when the plurality of electric device controllers transmit the respective image signals, the image signals are transmitted in the form of radio waves having different frequency bands predetermined for the electric device controllers, respectively, and the transmitter-receiver successively changes the frequency bands of the transmitted radio waves to reproduce the image signals.

8. The network system of on-vehicle electric devices according to any one of claims 5 to 7, wherein the electric device controller transmits an identification signal specific to the electric device controller together with the image signal to the transmitter-receiver.

9. The network system of on-vehicle electric devices according to any one of claims 5 to 8, wherein the image pickup unit is arranged in at least one of a front side of the vehicle, side faces of the vehicle, and a back side of the vehicle.

10. The network system of on-vehicle electric devices according to any one of claims 5 to 9, wherein the image pickup unit includes an infrared camera.

11. The network system of on-vehicle electric devices according to claim 10, wherein the infrared camera is arranged in a central portion in the front side of the vehicle.

12. The network system of on-vehicle electric devices according to any one of claims 5 to 11, wherein the central control unit detects an obstacle to travelling of the vehicle to generate risk information used to estimate a degree of risk at which the vehicle may collide with the obstacle, and makes the image display device display thereon the risk information.

13. A network system of on-vehicle electric devices in which a central control unit mounted on a vehicle and a plurality of on-vehicle electric devices are connected, the network system comprising:
one transmitter-receiver mounted on the vehicle and including a plurality of radio leakage devices for transmitting/receiving signals in a wireless manner, the plurality of radio leakage devices being connected in series with the central control unit through a cable to be provided in vicinities of positions of the on-vehicle electric devices, and generating radio waves corresponding to the signals in the vicinities of the positions of the on-vehicle electric devices when signals are transmitted from the central control unit to the on-vehicle electric devices; and
a plurality of electric device controllers provided in one-to-one correspondence to the plurality of on-vehicle electric devices, each of the electric device controllers including an antenna for transmitting/receiving therethrough a signal to/from the transmitter-receiver in a wireless manner so as to control corresponding one of the on-vehicle electric devices on the basis of the received signal or so as to process a signal generated by the corresponding one of the on-vehicle electric devices to transmit the processed signal to the transmitter-receiver.

14. The network system of on-vehicle electric devices according to claim 13, wherein when the transmitter-receiver transmits a control signal for controlling corresponding one of the on-vehicle electric devices to corresponding one of the electric device controllers, at least an identification signal of the on-vehicle electric device as an object of the control is transmitted together with the control signal.

15. The network system of on-vehicle electric devices according to claim 14, wherein the transmitter-receiver further transmits a WARD signal.

16. The network system of on-vehicle electric devices according to claim 14 or 15, wherein when the on-vehicle electric device specified with the identification signal is corresponding one of the on-vehicle electric devices provided in one-to-one correspondence to the electric device controllers, before predetermined control information based on the control signal is outputted to the corresponding one of the on-vehicle electric devices, corresponding one of the electric device controllers outputs a reset signal to reset the on-vehicle electric device to be controlled.

17. A power supply controller, which is connected in one-to-one correspondence to an electric device, for changing ON/OFF of supply of an electric power to the electric device in accordance with a control signal issued from a central control unit, wherein, in a case that the power supply receives a signal from the central control unit, a WARD signal, an identification signal of the electric device as an object of control and a control signal used to control the electric device are discriminated from the received signal and that the electric device specified with the identification signal is the connected electric device, then
the power supply outputs a reset signal used to reset the electric device to be controlled before outputting predetermined control information based on the control signal.
